# EUROPEAN PATENT SPECIFICATION

(11) **EP 4 536 487 B1**
(45) Date of publication and mention of the grant of the patent: **25.03.2026**
(21) Application number: 23727455.0
(22) Date of filing: 10.05.2023
(51) Int. Cl.: B60C 9/11

(54) **A REINFORCED BICYCLE TYRE**
VERSTÄRKTER FAHRRADREIFEN
PNEU DE BICYCLETTE RENFORCÉ

(30) Priority: 06.06.2022 IT 202200011918
(43) Date of publication of application: 16.04.2025
(73) Proprietor: Vittoria S.p.A., 24041 Brembate (BG) (IT)
(72) Inventor: BANNING AVERY, Kenneth, 24041 Brembate (BG) (IT); TEN HOFF, Vanessa, 24041 Brembate (BG) (IT); KIATAMORNVONG, Penparn, 24041 BREMBATE (BG) (IT)
(74) Representative: Perani & Partners S.p.A.
(86) International application number: PCT/EP2023/062456
(87) International publication number: WO 2023/237281

(56) References cited:
- EP-A1- 1 288 357
- EP-A1- 3 575 109
- EP-A1- 3 711 977
- EP-A2- 0 182 365
- GB-A- 1 278 711
- JP-U- H0 549 406
- US-A- 4 418 736

## Description

### Field of the invention

The present invention relates to a bicycle tyre having a reinforced structure, according to the pre-characterization portion of claim 1.

More specifically the present invention relates to a reinforced bicycle tyre having a higher tearing and perforation resistance as well as a reduced weight.

### State of the art

Typically, a bicycle tyre comprises a carcass part that forms a frame of the tyre and a tread part on a side of a ground contact surface between the ground and the carcass.

Since the bicycle tyres are required to be lightweight, to sustain light loads, they have a smaller thickness with respect, for example, to the tyre suitable for the automotive industry.

Thus, where there are sharp objects such as nails, glass pieces, and/or metal pieces on the road, such sharp objects may easily penetrate the tread part reaching the carcass, causing damage to or puncture of the bicycle tyre.

Consequently, to obviate such problems, the known bicycle tyres are provided with different reinforcements systems arranged in the tread and/or between the tread and carcass.

Such reinforcement systems comprise a more resistance rubber with thick tread.

In other cases, the reinforcement systems comprise cut-resistant fibre reinforcement, so that the tyre is protected against puncture.

The relatively stiff material or the weight of the reinforcement systems insert can have a negative influence on the performance of the bicycle tyre.

In further other embodiments, the reinforcement systems can comprise reinforcing ply made of multifilament threads of thermoplastic liquid crystal polyester filaments which increase the weight of bicycle tyre up to unacceptable level for using such a tyre in semi-professional or professional activities.

It is further to be noted that the reinforcing ply are arranged on the carcass. This specific positioning can cause problems during production as well as undesired behaviour of the tyre during its normal use.

### Summary of the invention

Therefore, the technical purpose of the present invention is to provide a bicycle tyre that can obviate the aforementioned prior art drawbacks.

In particular, the object of the present invention is to provide a bicycle tyre that can improve the tearing resistance without increasing the overall weight of the bicycle tyre.

It is further object of the present invention to provide an alternative way to improve the tearing resistance for a bicycle tyre without increasing the overall weight of the bicycle tyre.

The aforementioned technical purpose and objects are substantially fulfilled by a bicycle tyre that comprises the technical features as disclosed in one or more of the accompanying claims.

### Advantages of the Invention

According to the present invention, using one or more ripstop fabrics in the carcass allows to reduce the weight of the bicycle tyre.

Further, according to the present invention, using one or more ripstop fabrics in the carcass allows to simplify the production process.

Further, according to the present invention, using one or more ripstop fabrics in the carcass allows to improve the reliability and the durability of the bicycle tyre.

Further, according to the present invention, using one or more ripstop fabrics in the carcass allows to improve the puncture and tearing resistance without influencing the performance of the bicycle tyre itself.

### DESCRIPTION OF DRAWINGS

Further features and advantages of the present invention will result more clearly from the illustrative, non-limiting description of a preferred, non-exclusive embodiment of bicycle tyre as shown in the annexed drawings, in which:
- Figure 1 shows a perspective view of the portion of the bicycle tyre according to a first embodiment of the present invention with some parts exported to better show the others, wherein a portion of the coating of the carcass has been omitted in order to better show the built in ripstop fabric;
- Figure 2 shows a perspective view of the portion of the bicycle tyre according to a second embodiment of the present invention with some parts exported to better show the others, wherein a portion of the coating of the carcass has been omitted in order to better show the built in ripstop fabric;
- Figure 3 shows a perspective view of the portion of the bicycle tyre according to a third embodiment of the present invention with some parts exported to better show the others, wherein a portion of the coating of the carcass has been omitted in order to better show the built in ripstop fabric;
- Figure 4 shows a perspective view of the portion of the bicycle tyre according to a fourth embodiment of the present invention with some parts exported to better show the others, wherein a portion of the coating of the carcass has been omitted in order to better show the built in ripstop fabric;
- Figure 5 shows a perspective view of the portion of the bicycle tyre according to a fifth embodiment of the present invention with some parts exported to better show the others, wherein a portion of the coating of the carcass has been omitted in order to better show the built in ripstop fabric.

### DETAILED DESCRIPTION

Even when this is not expressly stated, the individual features as described with reference to the particular embodiments shall be intended as auxiliary to and/or interchangeable with other features described with reference to other exemplary embodiments.

In the following description the inventive features are described in connection with a so-called clincher tyre construction but the same features can be applied also to a tubular tyre construction.

For the scope of the present invention, a ripstop fabric is a woven fabric with reinforcement threads, wherein the reinforcement threads being interwoven in the woven fabric.

Preferably, the woven fabric can be made in cotton, silk, polyester, polypropylene or etc.

The reinforcement threads can be made in cotton, nylon or aramid etc.

According to the description, the ripstop fabric can be implemented in any pattern and shape available such as regular or irregular geometric shapes.

It is further to be noticed that the ripstop fabric can have a surface area that can vary from a minimum size that can be produced to a maximum size compatible to the application in the carcass.

Such reinforcement threads are interwoven in the woven fabric.

Each ripstop fabric comprises a woven fabric layer with reinforcement threads.

For the scope of the present invention, a carcass is a component which defines and outlines the tyre interior space for an inflation fluid. Namely, the carcass is the casing for the inflation fluid.

The carcass is in the form of sheet which define the tyre interior space by warping around itself one or more times or by defining a single structure.

In the case of clincher tyre construction, the sheet can wrap around the relative beads and in the case of the of tubular tyre construction the sheet can wrap at the connecting end portions.

Referring now to the annexed figures, numeral 1 generally designates a bicycle tyre of the present invention.

The bicycle tyre 1 comprises a tyre carcass 10 which defines a tyre interior space 20 for the inflation fluid. The tyre carcass 10 has an internal surface 10a faced to the tyre interior space 20 and an opposite external surface 10b.

The inflation fluid can be air, or mixture of fluid known to the skilled person in the art and therefore not described in detail.

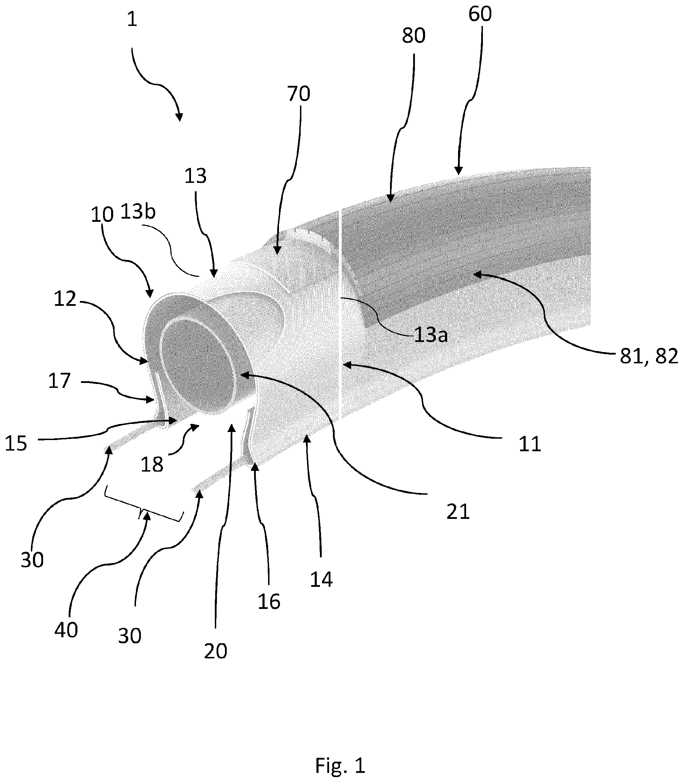

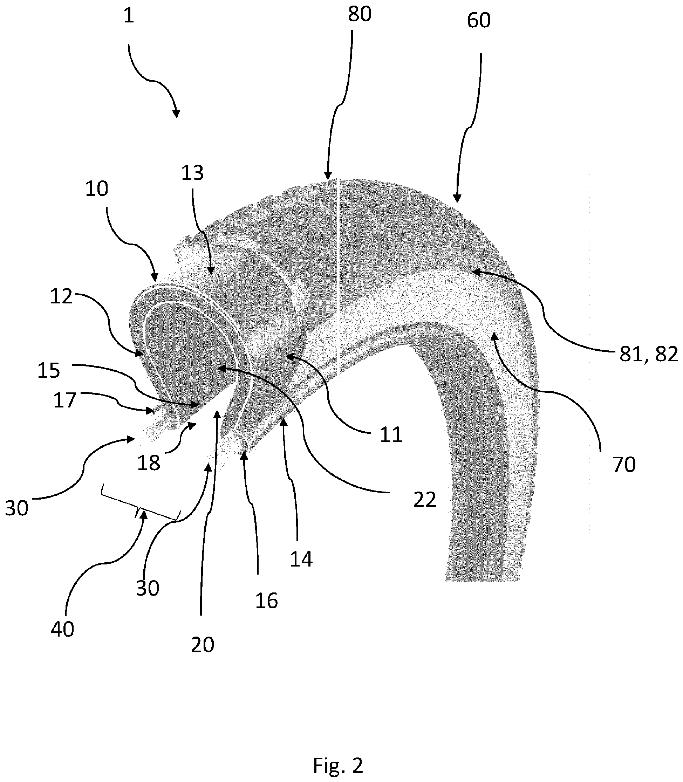

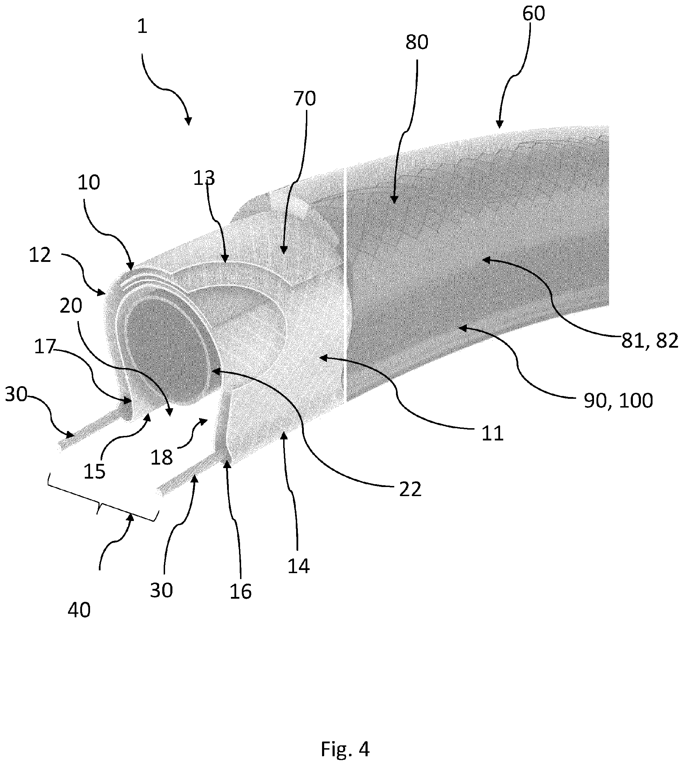

The interior space 20 comprises an air chamber 21, figures 1 and 4, or an inflation area 22 as shown in figures 2, 3 and 5

It is to be noted that the tyre carcass 10 can comprise a bicycle ring to be mounted on a relative bicycle rim.

The tyre carcass 10 has two opposite sidewalls 11, 12 and a central wall 13 connecting the sidewalls 11, 12.

It is to be noticed that the sidewalls 11, 12 defines the tyre base 40 configured for fastening to a bicycle rim.

The sidewalls 11, 12 and the central wall 13 define a substantially U-shaped empty ring or, alternatively, a O-shaped empty ring wherein opposite to the central wall 13 the tyre carcass 10 can be fastened to a bicycle rim.

In the clincher tyre construction, the sidewalls 11, 12 and the central wall 13 define a substantially U-shaped empty and the tyre carcass 10 has an opening 18 on the opposite to the central wall 13.

In the case of a tubular tyre construction, it shall be noted that the sidewalls 11, 12 and the central wall 13 define a closed chamber for the fluid. In fact, such empty ring can be filled with a fluid (such as air) in the air chamber 21 or directly in the inflation area 22 upon coupled with the bicycle rim.

In the case of the clincher tyre construction, each sidewall 11, 12 has a free end 14, 15 which defines a bead 16, 17. Each bead 16, 17 is a bend of the relative sidewall 11, 12 at the free ends 14, 15.

Irrespective of the embodiment (tubular tyre construction or clincher tyre construction), the tyre carcass 10 comprises a bead core 30 arranged inside each bead 16, 17 of the free ends 14, 15 of the sidewalls 11, 12.

Each bead core 30 can be made of rigid and elastic material such as metal, for giving to the bicycle tyre 1 a base rigid structure.

The bead cores 30 run in the relative bead 16, 17 defining two rings.

In addition, the bead cores 30 inserted in the relative bead 16, 17 define a tyre base 40 configured for fastening to a bicycle rim.

Namely, the tyre base 40 comprises retaining elements defined by the assembly of beads 16, 17 with the bead cores 30 configured to engage relative catching means formed to the bicycle rim to fix the bicycle tyre 1 to the bicycle rim and retain it during the use conditions of the bicycle tyre 1.

In the case of a tubular tyre construction, each sidewall 11, 12 has a connecting end portion configured to mutually connect the other connecting end portion. Each connecting end portion comprises a reinforcement bead and connecting elements configured to mutually connected the connecting end portions. In addition, the connecting end portions define a tyre base 40 configured for fastening to a bicycle rim such as by glue process.

The central wall 13 extends between two opposite perimetral edges 13a, 13b. Each sidewall 11, 12 instead extends from the relative perimetral edges 13a, 13b to the beads 16, 17 or to the respective connecting end portions.

The bicycle tyre 1 comprises a tread 60 externally covering at least the central wall 13 of the tyre carcass 10.

It is to be noted that the tread 60 can be applied on the tyre carcass 10 by bonding or the tread 60 can embed at least a portion of the tyre carcass 10.

Namely, the tread 60 can be applied on an external surface of the tyre carcass 10 opposite to an internal surface faced to the interior space 20.

In the present embodiment, the tread 60, having a coupling surface facing the tyre carcass 10 and opposite environment surface normally faced to the external environment, is attached to the tyre carcass 10 by coupling of the external surface 10b of the tyre carcass 10 and the coupling surface of the tread 60.

Such coupling can be performed by vulcanization or other bond such as glue.

In the case of embedding, the tyre carcass 10 is at least in part immersed in the tread 60 such that the relative external surface is arranged between the coupling surface and the environment surface, namely in the thickness of the tread 60.

In further embodiment, the tyre carcass 1 can comprise a reinforcement layer arranged between the tyre carcass 10 and the tread 60 to further improve the performance and resistance of the tyre.

Preferably, the tread 60 comprises a central cover 80 provided for ground contact and covering at least the central wall 13 of the tyre carcass 10.

Specifically, the central cover 80 extends on the central wall 13 between two opposite lateral edges 81, 82 and has a central cover thickness Tcc.

In details, the central cover 80 is arranged at the central wall 13 to covering it. The central cover 80 can have different patterns formed on the environment surface as a function of the bicycle tyre application such as mountain-bike or corsa speed.

According to one embodiment, the tread 60 comprises lateral covers 90, 100 extending from respective lateral edges 81, 82 to the beads 16, 17 or to the respective connecting end portions.

Specifically, each lateral cover 90, 100 is configured to cover a relative sidewall 11, 12 of the tyre carcass 10.

In addition, the lateral cover 90, 100 as the central cover 80 has a lateral thickness Tlc.

It is to be noted that in the present embodiment, the lateral covers 90, 100 extends from the central cover 80 at the opposite lateral edges 81, 82 up to the beads 16, 17 or to the respective connecting end portions.

In this way, the lateral covers 90, 100 are configured to be coupled at the beads 16, 17 with the bicycle rim or at the respective connecting end portions.

According to the present description, the bicycle tyre 1 comprises one or more ripstop fabrics 70 applied in the tyre carcass 10.

According to the preferred embodiments, the one or more ripstop fabrics 70 are arranged in the sidewalls 11, 13 and/or in the central wall 13. According to alternative and combinable embodiment, the one or more ripstop fabrics 70 are arranged on or in the internal surface 10a of the carcass 10.

Preferably, the one or more ripstop fabrics 70 are coated with polymer in order to define a part or the entire tyre carcass 10.

In other words, the one or more ripstop fabrics 70 are coated inside with polymer so as to outline the tyre carcass.

According to one embodiment, the one or more ripstop fabrics 70 are arranged into the tyre carcass 10 by vulcanization process.

Thanks to the position of the ripstop fabrics, i.e. into the carcass 10, the ripstop fabric 70 improves the tearing resistance and puncture resistance of the bicycle tyre 1 assuring at the same time a weight substantial identical to a known bicycle tyre.

Furthermore, thanks to the position of the ripstop fabrics 70 is possible to prevent a tear or rip from becoming larger.

This aim is achieved also by the fact that the one or more ripstop fabrics 70 comprise a pattern of woven fabric and, preferably, reinforcement threads. That allows to stop the propagation of tear in the bicycle tyre 1.

In addition, the ripstop fabric 70 is extremely durable because it is woven using a reinforced and tightly woven crosshatch pattern. This makes the bicycle tyre 1 resistant to tearing, ripping and fraying.

It should be noted that the one or more ripstop fabrics 70 is not arranged in the tread and/or between the tread and carcass.

It is to be noted that the tyre carcass 10 has a carcass thickness Tca.

Preferably, the one or more ripstop fabrics 70 are arranged in the carcass thickness Tca.

Each ripstop fabric 70 applied in the tyre carcass 10 is embedded in the tyre carcass 10 to be part of the tyre carcass 10 structure.

Namely, each ripstop fabric 70 is embedded, buried or immersed into the carcass thickness Tca, preferably by coating such as with rubber or other polymers.

In details, each ripstop fabric 70 is arranged inside the tyre carcass 10 such that a layer or film of tyre carcass 10 material, such the coating material, is arranged on each two opposite surfaces of the ripstop fabric 70.

In other words, the one or more ripstop fabrics 70 are pieces of material inserted into the tyre carcass 10 which extend inside the tyre carcass 10 in one or more portions of the tyre carcass 10 or for the entire tyre carcass 10.

According to a preferred embodiment, the bicycle tyre 1 can comprise a plurality of ripstop fabrics 70 at least in part or totally overlapped one on the other inside the tyre carcass 10. Alternatively or in combination, the bicycle tyre 1 can comprise a plurality of ripstop fabrics 70 arranged side by side in the tyre carcass 10.

Each ripstop fabric 70 of the plurality can be independent from the other in terms of material, extension, pattern and shape.

According to one embodiment of the present invention, shown in figure 1, the ripstop fabric 70 is applied in the central wall 13 of the tyre carcass 10 at least between the sidewalls 11, 12. Namely, the ripstop fabric 70 is arranged in the tyre carcass 10 between the perimetral edges 13a, 13b. In the present embodiment, the central cover 80 of the tread 60 is arranged on the central wall 13. In details, the ripstop fabric 70 can extend in the tyre carcass between the perimetral edges 13a, 13b

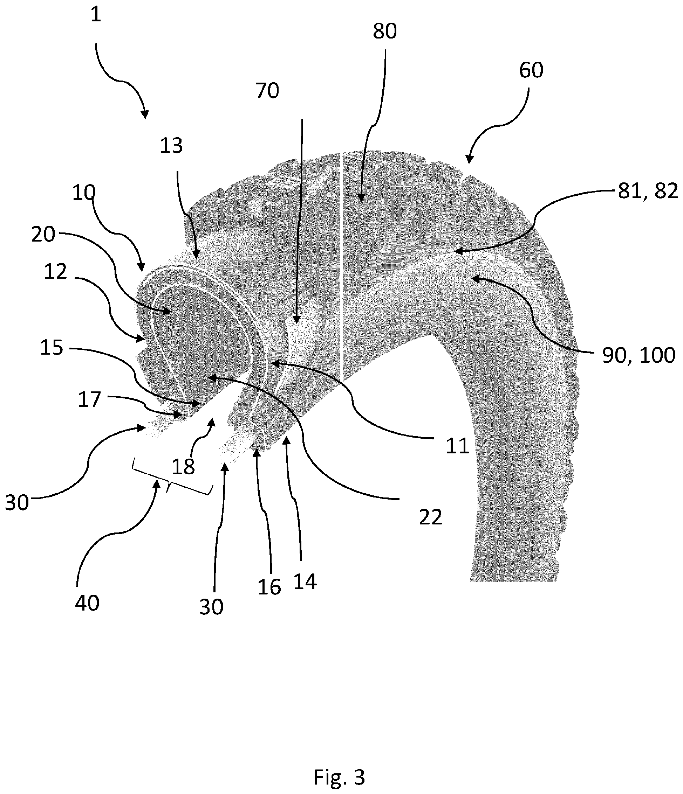

According to one embodiment of the present invention shown in figure 2 and 3, the ripstop fabric 70 is applied at least in part in each sidewall 11, 12 of the tyre carcass 10. Preferably, the sidewalls 11, 12 can be exposed to the external environment or covered by lateral cover 90, 100 of the tread 60. The rip stop fabric 70 is arranged in the tyre carcass 10 for each sidewall 11, 12 at least between the perimetral edges 13a, 13b and the respective beads 16, 17 or between the perimetral edges 13a, 13b and the connecting end portions.

Namely, the ripstop fabric 70 extends between the perimetral edges 13a, 13b and the beads 16, 17 or between the perimetral edges 13a, 13b and the connecting end portions respectively in the tyre carcass for each sidewalls 11, 12.

According to one embodiment of the present invention, the ripstop fabric 70 is applied at least in each sidewall 11, 12 and at least in part in the central wall 13.

Namely, each ripstop fabric 70 can go beyond the perimetral edges 13a, 13b into the central wall 13 extending at least in part both into sidewalls 11, 12 and central wall 13.

According to one embodiment, not shown in the figure, the ripstop fabric 70 can extend between sidewalls 11, 12 as one-piece element.

According to an embodiment of the present invention as shown in figure 4, the tyre carcass 10 is made by the ripstop fabric 70 such that the ripstop fabric 70 is applied into the sidewalls 11, 12 and into the sidewalls 11, 12.

Namely, the tyre carcass 10 the central wall 13 and the sidewalls 11, 12 are made of ripstop fabric 70 and define the frame/casing as above described.

In other words the tyre carcass 10 corresponds to the ripstop fabric 70 coated with the polymer. In this way, the ripstop fabric 70 realizes a one piece sheet which outlines the tyre carcass 10.

Preferably, the sidewalls 11, 12 and central wall 13 of the tyre carcass 10 made of ripstop fabric 70, as previously embodiments, can be covered or embedded at least in part by/into the tread 60 at the sidewalls 11, 12 and/or at the central wall 13.

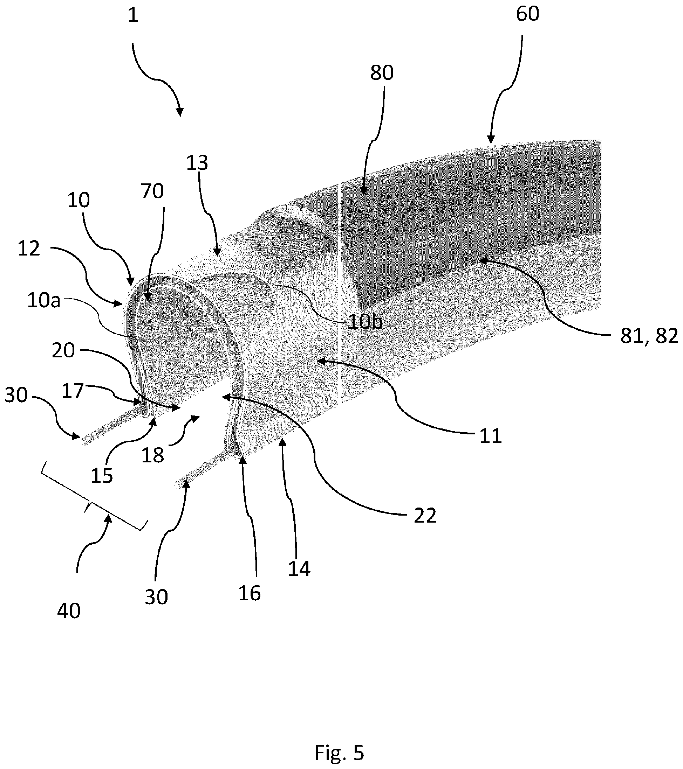

According to one embodiment of the present invention, shown in figure 5, the ripstop fabric 70 is applied on the internal surface 10a of the carcass 10 extending between the beads16, 17. Namely, the ripstop fabric 70 covers at least partially, preferably totally, the internal surface 10a of the carcass 10 from bead 16 to bead 17. In the present, embodiment, the ripstop fabric 70 is internally arranged at the central wall 13 and on the sidewalls 11, 12.

Preferably, the ripstop fabric 70 is applied on the internal surface 10a according to the known bead to bead process.

Advantageously, the arrangement of the ripstop fabric 70 on the internal surface 10a from bead 16 to bead 17 provides further stretching and abrasion resistance, while still providing the core duty of reducing tear propagation for the vulcanized casing structure.

## Claims

1. A bicycle tyre (1) comprising:
- a tyre carcass (10) defining a tyre interior space (20) for the inflation fluid and having opposite sidewalls (11, 12) and central wall (13) connecting the sidewalls (11, 12), the sidewalls (11, 12) defining a tyre base (40) configured for fastening to a bicycle rim;
- a tread (60) externally covering at least the central wall (13) of the tyre carcass (10);
**characterized in that** the bicycle tyre (1) comprises one or more ripstop fabrics (70) applied in the tyre carcass (10), said ripstop fabric (70) is a woven fabric with reinforcement threads, wherein the reinforcement threads are interwoven in the woven fabric.

2. The bicycle tyre (1) according to claim 1, wherein the ripstop fabric is applied in the central wall (13) of the tyre carcass (10) at least between the sidewalls (11, 12).

3. The bicycle tyre (1) according to claim 1, wherein the ripstop fabric (70) is applied at least in part in each sidewall (11, 12) of the tyre carcass (10).

4. The bicycle tyre (1) according to claim 1, wherein the ripstop fabric (70) is applied at least in part in each sidewall (11, 12) and at least in part in the central wall (13).

5. The bicycle tyre (1) according to claim 1, wherein the tyre carcass (10) is made by the ripstop fabric (70) such that the ripstop fabric (70) is applied into the sidewalls (11, 12) and into the central wall (13).

6. The bicycle tyre (1) according to any claims from 1 to 5, wherein the tyre carcass (10) has a carcass thickness (Tca), the ripstop fabric (70) being embedded in the thickness (Tca) of the tyre carcass (10).

7. The bicycle tyre (1) according to any claims 1 to 6, wherein the one or more ripstop fabrics (70) are arranged into the tyre carcass (10) by vulcanization process.

8. The bicycle tyre (1) according to any claims 1 to 7, wherein:
- each sidewall (11, 12) has a free end (14, 15) which define a bead (16, 17);
- a bead core (30) is arranged inside each bead (16, 17) of the free ends of the sidewalls (11, 12) and defines a tyre base (40) configured for fastening to a bicycle rim.

9. The bicycle tyre (1) according to any claims 1 to 7, wherein:
- each sidewall (11, 12) has a connecting end portion configured to mutually connect the other connecting end portion;
- the connecting end defines a tyre base (40) configured for fastening to a bicycle rim.

10. The bicycle tyre (1) according to any claims 1 to 9, wherein the woven fabric is made of a material selected among cotton, silk, polyester or polypropylene, the reinforcement threads is made of a material selected among cotton, nylon or aramid.

## Patentansprüche

1. Ein Fahrradreifen (1), umfassend:
∘ eine Reifenkarkasse (10), die einen Reifeninnenraum (20) für ein Aufpumpfluid definiert und gegenüberliegende Seitenwände (11, 12) sowie eine die Seitenwände (11, 12) verbindende Mittelwand (13) aufweist, wobei die Seitenwände (11, 12) eine Reifenbasis (40) definieren, die zur Befestigung an einer Fahrradfelge ausgebildet ist;
∘ eine Lauffläche (60), die äußerlich zumindest die Mittelwand (13) der Reifenkarkasse (10) abdeckt; **dadurch gekennzeichnet, dass** der Fahrradreifen (1) ein oder mehrere Ripstop-Gewebe (70) umfasst, die in der Reifenkarkasse (10) eingebracht sind, wobei das Ripstop-Gewebe (70) ein Gewebe mit Verstärkungsfäden ist, wobei die Verstärkungsfäden in das Gewebe eingewebt sind.

2. Der Fahrradreifen (1) nach Anspruch 1, wobei das Ripstop-Gewebe (70) in der Mittelwand (13) der Reifenkarkasse (10) zumindest zwischen den Seitenwänden (11, 12) eingebracht ist.

3. Der Fahrradreifen (1) nach Anspruch 1, wobei das Ripstop-Gewebe (70) zumindest teilweise in jeder Seitenwand (11, 12) der Reifenkarkasse (10) eingebracht ist.

4. Der Fahrradreifen (1) nach Anspruch 1, wobei das Ripstop-Gewebe (70) zumindest teilweise in jeder Seitenwand (11, 12) und zumindest teilweise in der Mittelwand (13) eingebracht ist.

5. Der Fahrradreifen (1) nach Anspruch 1, wobei die Reifenkarkasse (10) durch das Ripstop-Gewebe (70) derart gebildet ist, dass das Ripstop-Gewebe (70) in die Seitenwände (11, 12) und in die Mittelwand (13) eingebracht ist.

6. Der Fahrradreifen (1) nach einem der Ansprüche 1 bis 5, wobei die Reifenkarkasse (10) eine Karkassendicke (Tca) aufweist, wobei das Ripstop-Gewebe (70) in der Dicke (Tca) der Reifenkarkasse (10) eingebettet ist.

7. Der Fahrradreifen (1) nach einem der Ansprüche 1 bis 6, wobei das eine oder die mehreren Ripstop-Gewebe (70) durch einen Vulkanisationsprozess in der Reifenkarkasse (10) angeordnet sind.

8. Der Fahrradreifen (1) nach einem der Ansprüche 1 bis 7, wobei:
∘ jede Seitenwand (11, 12) ein freies Ende (14, 15) aufweist, das einen Wulst (16, 17) definiert;
∘ ein Wulstkern (30) innerhalb jedes Wulstes (16, 17) der freien Enden der Seitenwände (11, 12) angeordnet ist und eine Reifenbasis (40) definiert, die zur Befestigung an einer Fahrradfelge ausgebildet ist.

9. Der Fahrradreifen (1) nach einem der Ansprüche 1 bis 7, wobei:
∘ jede Seitenwand (11, 12) einen Verbindungs-Endabschnitt aufweist, der dazu ausgebildet ist, den anderen Verbindungs-Endabschnitt gegenseitig zu verbinden;
∘ die Verbindungs-Endabschnitte eine Reifenbasis (40) definieren, die zur Befestigung an einer Fahrradfelge ausgebildet ist.

10. Der Fahrradreifen (1) nach einem der Ansprüche 1 bis 9, wobei das Gewebe aus einem Material hergestellt ist, das aus Baumwolle, Seide, Polyester oder Polypropylen ausgewählt ist, und die Verstärkungsfäden aus einem Material hergestellt sind, das aus Baumwolle, Nylon oder Aramid ausgewählt ist.

## Revendications

1. Un pneu de bicyclette (1) comprenant :
∘ une carcasse de pneu (10) définissant un espace intérieur de pneu (20) pour le fluide de gonflage et ayant des flancs opposés (11, 12) et une paroi centrale (13) reliant les flancs (11, 12), les flancs (11, 12) définissant une base de pneu (40) configurée pour une fixation à une jante de bicyclette ;
∘ une bande de roulement (60) recouvrant extérieurement au moins la paroi centrale (13) de la carcasse de pneu (10) ; **caractérisé en ce que** le pneu de bicyclette (1) comprend un ou plusieurs tissus anti-déchirure (70) appliqués dans la carcasse de pneu (10), ledit tissu anti-déchirure (70) étant un tissu tissé avec des fils de renforcement, dans lequel les fils de renforcement sont entrelacés dans le tissu tissé.

2. Le pneu de bicyclette (1) selon la revendication 1, dans lequel le tissu anti-déchirure(70) est appliqué dans la paroi centrale (13) de la carcasse de pneu (10) au moins entre les flancs (11, 12).

3. Le pneu de bicyclette (1) selon la revendication 1, dans lequel le tissu anti-déchirure (70) est appliqué au moins en partie dans chaque flanc (11, 12) de la carcasse de pneu (10).

4. Le pneu de bicyclette (1) selon la revendication 1, dans lequel le tissu anti-déchirure (70) est appliqué au moins en partie dans chaque flanc (11, 12) et au moins en partie dans la paroi centrale (13).

5. Le pneu de bicyclette (1) selon la revendication 1, dans lequel la carcasse de pneu (10) est constituée par le tissu anti-déchirure (70) de telle sorte que le tissu anti-déchirure (70) est appliqué dans les flancs (11, 12) et dans la paroi centrale (13).

6. Le pneu de bicyclette (1) selon l'une quelconque des revendications 1 à 5, dans lequel la carcasse de pneu (10) a une épaisseur de carcasse (Tca), le tissu anti-déchirure (70) étant noyé dans l'épaisseur (Tca) de la carcasse de pneu (10).

7. Le pneu de bicyclette (1) selon l'une quelconque des revendications 1 à 6, dans lequel le ou les tissus anti-déchirure (70) sont agencés dans la carcasse de pneu (10) par un processus de vulcanisation.

8. Le pneu de bicyclette (1) selon l'une quelconque des revendications 1 à 7, dans lequel :
∘ chaque flanc (11, 12) a une extrémité libre (14, 15) qui définit un talon (16, 17) ;
∘ une tringle (30) est agencée à l'intérieur de chaque talon (16, 17) des extrémités libres des flancs (11, 12) et définit une base de pneu (40) configurée pour une fixation à une jante de bicyclette.

9. Le pneu de bicyclette (1) selon l'une quelconque des revendications 1 à 7, dans lequel :
∘ chaque flanc (11, 12) a une partie d'extrémité de connexion configurée pour connecter mutuellement l'autre partie d'extrémité de connexion ;
∘ les parties d'extrémité de connexion définissent une base de pneu (40) configurée pour une fixation à une jante de bicyclette.

10. Le pneu de bicyclette (1) selon l'une quelconque des revendications 1 à 9, dans lequel le tissu tissé est fait d'un matériau choisi parmi le coton, la soie, le polyester ou le polypropylène, les fils de renforcement sont faits d'un matériau choisi parmi le coton, le nylon ou l'aramide.
